# EUROPEAN PATENT APPLICATION

(11) **EP 4 424 908 A1**
(43) Date of publication of application: **04.09.2024**
(21) Application number: 23892742.0
(22) Date of filing: 25.05.2023
(51) Int. Cl.: D21C 5/00, C13K 13/00

(54) **METHOD FOR EXTRACTING HIGH-PURITY XYLOSE LIQUID AND CELLULOSE FROM CORN STRAW**

(30) Priority: 08.12.2022 CN 202211575495
(71) Applicant: Zhejiang Huakang Pharmaceutical Co., Ltd., Quzhou, Zhejiang 324302 (CN)
(72) Inventor: LI, Mian, Santa Clara, CA (US); HU, Changhui, Quzhou, Zhejiang 324302 (CN); YAN, Liangcong, Quzhou, Zehjiang 324302 (CN); LUO, Jiaxing, Quzhou, Zehjiang 324302 (CN); YANG, Wulong, Quzhou, Zehjiang 324302 (CN); XU, Weidong, Quzhou, Zehjiang 324302 (CN); WU, Qiang, Quzhou, Zehjiang 324302 (CN)
(74) Representative: Sun, Yiming
(86) International application number: PCT/CN2023/096365
(87) International publication number: WO 2024/119732

(57) **Abstract**

The present disclosure provide a method for extracting xylose liquid and cellulose with high purity from corn straw. The method includes raw material screening, raw material preprocessing, alkali processing, acid hydrolysis, and gradient alkali processing. The present disclosure adopt a gradient selective refining method for extracting a high-purity xylose liquid and cellulose from the corn straw, so as to maximize the extraction of the xylose from the corn straw, and at the same time, to separate and extract a high-purity cellulose product from straw residue under a low-cost process processing.

## Description

### TECHNICAL FIELD

The present disclosure belongs to the technical field of cellulose preparation, and in particular to a method for extracting xylose liquid and cellulose with high purity from corn straw.

### BACKGROUND

There are abundant sources of lignocellulosic raw materials, including agricultural residues, forest crops, and industrial residues, etc. Corn straw is one of the agricultural residues, which is abundant, cheap, safe, and renewable, and can be used as an alternative to fossil energy. The three major components, namely, cellulose, hemicellulose, and lignin in a straw biomass raw material may be converted into many forms of high-value chemicals, thereby reducing environmental problems, and contributing to the development of economy and society. However, the components in the corn straw are tightly connected and not easy to be separated and purified for further high-value conversion, and at present, most straw biomass is directly burned or discarded. Therefore, there is an urgent need for designing a suitable straw processing method to improve the utilization rate of straw raw materials.

At present, a process of separating the cellulose, hemicellulose, and lignin in the corn straw mainly involves: directly processing agricultural waste with an acid solution or xylanase, hydrolyzing or enzymatically decomposing the hemicellulose component therein to obtain xylose, using cellulose to process a residue so as to obtain a glucose solution, and finally fermenting the obtained glucose solution into an ethanol product. However, many technical problems are still not solved.

Problem 1, when using the acid hydrolysis to process the corn straw to obtain the hydrolyzate, the composition of the hydrolyzate is relatively complex and a purity of the xylose is low, which has an impact on subsequent purification and refining of the xylose. Problem 2, when using the xylanase and cellulase to enzymatically hydrolyze the corn straw to produce the xylose and the glucose, the cost of enzymes is high, and during the enzymatic hydrolysis process, the lignin component in the corn straw adsorbs enzyme proteins, hindering the enzymatic hydrolysis process.

Problem 3, the waste residue obtained by acid hydrolysis has a low cellulose content and a low value.

The cellulose content in the cellulose-containing agricultural waste residues currently used for enzymatic fermentation is not very high. For example, the patent No. CN101696427A uses an alkali solution to preprocess a corn cob raw material, and then uses hemicellulase for processing, which converts more than 45% of the hemicellulose into the xylose solution, while obtaining the cellulose residue with a cellulose content of only 76.03%. When using market available cellulase and alcoholic active dry yeast to ferment to produce fuel ethanol, the ethanol obtained per gram of cellulose is 0.522g, and a production cost is high. For another example, the patent No. CN103045677A uses corn cob as the raw material. The patent first performs an alkali preprocessing, then acid hydrolyzes the residue of the alkali preprocessing to extract pentose sugars, and finally performs the enzymatic hydrolysis on the acid hydrolysis residue to prepare the glucose solution. After that, the glucose solution is fermented to produce ethanol. The cellulose content of the acid hydrolysis residue used in the patent is even lower than that of the cellulose residue used in the patent No. CN101696427A, that is, the cellulose content is below 76.03%.

### SUMMARY

The technical problem to be solved in the present disclosure is to provide a method for extracting xylose liquid and cellulose with high purity from corn straw. The gradient selective refining method is used to extract a high-purity xylose liquid and cellulose from the corn straw. In this manner, under a low-cost process condition, the high-purity xylose liquid and cellulose is able to be extracted from the corn straw as much as possible, while the cellulose products is able to be separated and extracted from the straw residues.

Embodiments of the present disclosure provide a method for extracting xylose liquid and cellulose with high purity from corn straw, including the following steps:
step 1, raw material screening including: selecting corn straw with a moisture content of 7%-13%;
step 2, raw material preprocessing including: processing the corn straw into powder using a pulverizer, a particle size of the powder being between 60 mesh and 300 mesh, and then putting the powder into a blower drying box and drying at 45°C for 22 h-26 h to obtain absolutely dry powdered corn straw;
step 3, alkali processing including: after mixing the absolutely dry powdered corn straw obtained in the step 2 with process water, adding 30% concentrated alkali liquid and adjusting a concentration of NaOH in the system to 0.1%-0.4%, performing the alkali processing for 1.2h~2.0h under a temperature of 85°C -125°C, then obtaining straw residue and a centrifugal clear liquid by centrifugal separation, wherein the straw residue enters a xylose extraction process;
step 4, acid hydrolysis including: mixing the straw residue obtained in the step 3 with a 1.0%~2.5% dilute H2SO4 solution in a certain proportion, performing an acid hydrolysis at 100°C~160°C for 30 min-120 min, and then performing a centrifugation to obtain an acid hydrolyzed liquid and acid hydrolyzed straw residue, wherein the acid hydrolyzed liquid is a high-purity xylose liquid, and the acid hydrolyzed straw residue enters a cellulose extraction process; and
step 5, gradient alkali processing including: after mixing the hydrolyzed straw residue obtained in the step 4 and the process water, adding 30% concentrated alkali liquid and adjusting an initial concentration of NaOH in the system to 0.2%~1%, performing preprocessing continuously for 4.0h-7.0h, wherein an initial temperature is 60°C ~90°C, then for every 1 hour, increasing the alkali concentration by 0.1%~0.5% and increasing the temperature by 10°C-20°C, after separating the processed material by centrifugation, washing a solid portion to obtain a high cellulose content product.

Compared with the current techniques, beside a simple process and a low cost, the method for extracting xylose liquid and cellulose with high purity from corn straw further has the following features.

First, 0.1~0.4% dilute alkali is used to preprocess the corn straw to first remove easily hydrolyzed lignin in the corn straw and colloids and other impurities in plant cell walls, while basically retaining the xylose component in the hemicellulose in the corn straw.

Second, a dilute acid hydrolysis is performed on the dilute alkali processed corn straw to hydrolyze the hemicellulose in the corn straw into xylose (with a conversion rate of 77.4%). At the same time, a hydrolysis liquid which is relatively clarified, with fewer impurities, and easy to separate out the xylose is obtained. Both the dilute alkali and the dilute acid treatment are completed in one step and do not require multi-level treatment, which simplifies the process, and the concentration of dilute alkali used is only 0.1% (mass fraction), and the concentration of dilute sulfuric acid is 2.49% (mass fraction);

Third, the acid-hydrolyzed straw residue (with a cellulose content of 63.39%, a hemicellulose content of 0%, and a lignin and other substances content of 36.61%) is further processed with alkali, and the concentration and temperature of the alkali are gradually increased to remove the lignin and other substances in the acid-hydrolyzed straw residue, so as to increase the cellulose content in the straw residue. Finally, after the alkali processing, a high purity cellulose product with a cellulose content of 97.96% is obtained. Using the gradiently increasing the alkali concentration and the preprocessing temperature, purer cellulose products are obtained. The method of the present disclosure solves the following problems:
1, at present, the residue after industrially extracting the xylose from agricultural waste is still burned directly as fuel, and the rich cellulose component is not effectively extracted and utilized, resulting in a waste of resources;
2, when the corn straw is acid hydrolyzed to extract the xylose, the purity of the xylose in the xylose hydrolyzate obtained is not high and with too much impurities, which makes it difficult to subsequently refine the hydrolyzate to extract the xylose products;
3, at present, since the residue after industrially extracting the xylose from agricultural waste contains lignin and other components, the cellulose content is not very high, which is less than 76.03%.

### DETAILED DESCRIPTION

In order to make the technical problem to be solved, the technical solution and the beneficial effect of the present disclosure clearer and more understandable, the following combines the embodiments to further describe the present disclosure in detail. It may be understood that the specific embodiments described herein are only for explaining the present disclosure, and are not intended to limit the present disclosure.

Embodiments of the present disclosure provide a method for extracting xylose liquid and cellulose with high purity from the corn straw, including the following steps.

In step 1, a raw material is screened. Specifically, corn straw with a moisture content of 7%-13% is selected.

In step 2, the raw material is preprocessed. Specifically, the corn straw is processed into powder using a pulverizer, wherein a particle size of the powder is between 60 mesh and 300 mesh. Then the powder is put into a blower drying box and dried at 45°C for 22 h-26 h, and the powder becomes absolutely dry powdered corn straw.

In step 3, the alkali processing is performed and includes: after mixing the absolutely dry powdered corn straw obtained in the step 2 with process water in a certain proportion, adding 30% concentrated alkali liquid and adjusting a concentration of NaOH (also referred to as NaOH concentration) in the system to 0.1%~0.4%, performing the alkali processing for 1.2h~2.0h under a temperature of 85°C -125°C, then obtaining straw residue and a centrifugal clear liquid by centrifugal separation, wherein the straw residue enters a xylose extraction process. After every 100g of corn straw being treated with alkali, 80.75 g of residual solids may be obtained, of which a xylose loss rate is less than 5% and a cellulose loss rate is less than 4%.

In step 4, the acid hydrolysis is performed and includes: mixing the straw residue obtained in the step 3 with a 1.0%~2.5% dilute H2SO4 solution in a certain proportion, performing an acid hydrolysis at 100°C-160°C for 30min~120min, and then performing a centrifugation to obtain an acid hydrolyzed liquid and acid hydrolyzed straw residue. The acid hydrolyzed liquid may enter the xylose extraction process to prepare xylose. The acid hydrolyzed liquid is a high-purity xylose liquid, and the acid hydrolyzed straw residue may enter a cellulose extraction process. For every 100g of the corn straw, after steps 2, 3, and 4, 53.11g of the acid hydrolyzed straw residue and 1.53L of the xylose hydrolysate may be obtained. The acid hydrolyzed straw residue may contain 34.32 g of cellulose, 18.79g of lignin and other substances, and the xylose hydrolysate may have a concentration of xylose of 11.84g/L, with a purity of 74.14%.

In step 5, a gradient alkali processing is performed and includes after mixing the acid hydrolyzed straw residue obtained in the step 4 and the process water in a certain proportion, adding 30% concentrated alkali liquid and adjusting a concentration of NaOH in the system to 0.2%~1%, performing preprocessing continuously for 4.0h-7.0h, wherein an initial temperature may be 60°C~90°C; then for every 1 hour, increasing the concentration of NaOH by 0.1%~0.5% and increasing the temperature by 10°C~20°C; after separating the treated material by centrifugation, washing a solid portion to obtain a high cellulose content product. After every 100g of the absolutely dry powdered corn straw being processed in the above steps, 27.37g of high-purity cellulose (97.49%) may be obtained.

Specifically, in step 1, the components of the corn straw raw material include a cellulose content of 36% to 41%, a hemicellulose content of 19% to 24%, a content of lignin and other substances of 35% to 45%.

Specifically, in step 3, for every 100g of the absolutely dry powdered corn straw after the alkali processing, 83.40g straw residue is obtained. The straw residue contains 36.98g of cellulose, 18.78g of hemicellulose, and 27.64g of lignin and other substances.

Specifically, in step 4, for every 100g of the absolutely dry powdered corn straw after the acid hydrolysis, 53.11g of the acid hydrolyzed straw residue and 1.53 L of xylose hydrolysate are obtained. The acid hydrolyzed straw residue contains 34.32g of cellulose, 18.79g of lignin and other substances, and a concentration of xylose in the xylose hydrolysate is 11.84 g/L, a purity is 74.14%.

Specifically, in step 5, for every 100g of the absolutely dry powdered corn straw after processing, 27.37g of high-purity cellulose is obtained (97.49%).

The method for extracting xylose liquid and cellulose with high purity from corn straw is further described below by specific embodiments.

### Embodiment 1: Alkali processing

In this embodiment, a four-factor, three-level response surface model optimization experiment was designed, and a total of 29 groups of experiments were carried out. Through the response surface model optimization and three batches of validation, it was found that in the optimal experimental group, a cellulose retention rate was 95.53%, a hemicellulose retention rate was 91.57%, and a lignin and other components removal rate was 32.22%. An optimal condition for the alkali processing was: under a 0.1% concentration of NaOH solution and a 1:6 solid-liquid rate, keeping the temperature at 125°C for 1.2h. A composition of the straw residue under the optimal condition for the alkali processing is shown in Table 1. Under this optimal condition, theoretically, for every 100g of the absolutely dry powdered corn straw (containing about 38.71g of cellulose, 20.51g of hemicellulose, and 40.78g of lignin and others) processed with the alkali, 83.40g of straw residue was obtained, which contained about 36.98g of cellulose, 18.78g of hemicellulose, and 27.64g of lignin and others.

**Table 1 Composition of straw residue under the optimal condition for the alkali processing**

| Straw residue | Cellulose | Hemicellulose | Lignin and others |
|---|---|---|---|
| Proportion | 44.34% | 22.52% | 33.14% |

### Embodiment 2: acid hydrolysis

This embodiment was performed in a total of 29 groups of experiments, specific experimental programs and experimental results are shown in Table 3. Through the response surface model optimization and three batches of validation, it was found that in the optimal experimental group, a xylose yield was 84.51%, a cellulose retention rate was 92.80%, a hemicellulose retention rate was 0%, and a removal rate of the lignin and others was 32.01%. The optimal condition for the acid hydrolysis was: under a 2.49% concentration of H2SO4 solution and a 1:12 solid-liquid rate, keeping the temperature at 124.8°C for 1.58h. A composition of the acid hydrolyzed straw residue under the optimal condition for the acid hydrolysis is shown in Table 2. Under this optimal condition, theoretically, for every 100g of the absolutely dry powdered corn straw (containing about 38.71g of cellulose, 20.51g of hemicellulose, and 40.78g of lignin and others), after the first dilute alkali processing followed by the dilute acid hydrolysis, 53.11g of acid hydrolyzed straw residue was obtained, which contained about 34.32g of cellulose and 18.79g of lignin and others.

**Table 2 Composition of acid hydrolyzed straw residue under the optimal condition for the acid hydrolysis**

| Acid hydrolyzed straw residue | Cellulose | Hemicellulose | Lignin and others |
|---|---|---|---|
| Proportion | 64.42% | 0% | 35.38% |

**Table 3 Optimization of the acid hydrolysis experiment programs and experiment results by response surface methodology**

| St d | Ru n | Acid usag e (%) | Temperatur e (°C) | Tim e (h) | Solid - liquid rate | Hemicellulos e content (%) | Cellulos e retain rate (%) | Xylos e yield (%) |
|---|---|---|---|---|---|---|---|---|
| 24 | 1 | 1.75 | 125 | 2 | 12 | 0.94 | 99.86 | 69.78 |
| 29 | 2 | 1.75 | 105 | 2 | 10 | 7.42 | 96.9 | 58.13 |
| 10 | 3 | 2.5 | 105 | 2 | 8 | 5.82 | 97.92 | 62.26 |
| 22 | 4 | 1.75 | 125 | 2 | 8 | 1.2 | 97.57 | 72.83 |
| 7 | 5 | 1.75 | 105 | 1.5 | 12 | 5.96 | 98.88 | 57.41 |
| 23 | 6 | 1.75 | 85 | 2 | 12 | 14.56 | 98.09 | 7.22 |
| 25 | 7 | 1.75 | 105 | 2 | 10 | 7.2 | 98.46 | 60.18 |
| 21 | 8 | 1.75 | 85 | 2 | 8 | 14.71 | 98.76 | 5.65 |
| 28 | 9 | 1.75 | 105 | 2 | 10 | 7.03 | 98.58 | 60.56 |
| 5 | 10 | 1.75 | 105 | 1.5 | 8 | 6.78 | 95.06 | 52.45 |
| 4 | 11 | 2.5 | 125 | 2 | 10 | 0 | 98.08 | 72.7 |
| 14 | 12 | 1.75 | 125 | 105 | 10 | 1.11 | 96.23 | 74.94 |
| 26 | 13 | 1.75 | 105 | 2 | 10 | 7.07 | 97.41 | 60.56 |
| 8 | 14 | 1.75 | 105 | 2.5 | 12 | 5.31 | 100 | 66.9 |
| 9 | 15 | 1 | 105 | 2 | 8 | 9.8 | 95.68 | 32.62 |
| 15 | 16 | 1.75 | 85 | 2.5 | 10 | 13.89 | 100 | 6.22 |
| 16 | 17 | 1.75 | 125 | 2.5 | 10 | 1.24 | 95.77 | 66.15 |
| 18 | 18 | 2.5 | 105 | 1.5 | 10 | 4.31 | 97.03 | 63.99 |
| 3 | 19 | 1 | 125 | 2 | 10 | 1.98 | 99.3 | 74.32 |
| 12 | 20 | 2.5 | 105 | 2 | 12 | 5.04 | 97.72 | 68.77 |
| 13 | 21 | 1.75 | 85 | 1.5 | 10 | 12.74 | 95.56 | 4.78 |
| 2 | 22 | 2.5 | 85 | 2 | 10 | 13.58 | 100 | 11.51 |
| 6 | 23 | 1.75 | 105 | 2.5 | 8 | 5.66 | 96.42 | 62.04 |
| 27 | 24 | 1.75 | 105 | 2 | 10 | 7.17 | 98.24 | 59.96 |
| 17 | 25 | 1 | 105 | 1.5 | 10 | 8.95 | 95.26 | 28.65 |
| 20 | 26 | 2.5 | 105 | 2.5 | 10 | 3.99 | 97.14 | 70.71 |
| 11 | 27 | 1 | 105 | 2 | 12 | 8.27 | 93.06 | 42.68 |
| 1 | 28 | 1 | 85 | 2 | 10 | 16.18 | 98.48 | 3.74 |
| 19 | 29 | 1 | 105 | 2.5 | 10 | 8.45 | 100 | 45.57 |

### Embodiment 3: Comparison between the xylose hydrolysate obtained by directly performing the acid processing on the corn straw and the xylose hydrolysate obtained by performing the alkali processing-acid hydrolysis on the corn straw

A xylose hydrolysate 1 was obtained by hydrolysis through the optimal processing condition of Embodiments 1~2, and a xylose hydrolysate 2 was obtained by the direct acid processing. The xylose hydrolysate 1 and the xylose hydrolysate 2 were subjected to a liquid-phase test for xylose purity: the xylose purity of the xylose hydrolysate 1 which undergoes an alkali processing-acid hydrolysis was 74.14%, and the xylose purity of the xylose hydrolysate 2 which undergoes a direct acid processing was 62.16%.

### Embodiment 4: Extraction of high-purity cellulose by further gradient alkali processing on the straw residue obtained from the alkali-acid processing

In this embodiment, the acid hydrolyzed straw residue (with cellulose content of 64.62%, hemicellulose content of 0%, lignin and other substance contents of 35.38%) was further subjected to the alkali processing to remove the lignin and other components in the acid hydrolyzed straw residue, and to increase the content of the cellulose in the straw residue.

### (1) Effect of an initial alkali dosage on increasing the cellulose content in the acid hydrolyzed straw residue

Preprocessing condition: a proportion of the acid hydrolyzed straw residue to purified water was 1:8, the initial reaction temperature was 90°C, the temperature was increased by 20°C per hour, 0.5% concentration NaOH was added, and a reaction time was 4h. The effect of an initial dosage of NaOH on the increasing of cellulose content in the acid hydrolyzed straw residue was examined. The initial alkali concentrations were ①0.2%, ②0.3%, ③0.4% and ④.5%, respectively. The corresponding results are shown in Table 4.

From Table 4, it can be seen that when the proportion of the initial alkali concentration is increased from 0.2% to 0.4%, the cellulose content in the remaining residue is 89.97%, which is basically the maximum, and at this time, the cellulose retention rate is 70.97%.

**Table 4 Effect of alkali dosage on the increasing of cellulose content in acid hydrolyzed straw residue**

| Initial system NaOH concentration | Cellulose content (%) | Cellulose retention rate (%) | Residue yield (%) |
|---|---|---|---|
| 0.2% | 85.38 | 78.12 | 58.00 |
| 0.3% | 89.97 | 70.97 | 50.00 |
| 0.4% | 89.87 | 68.41 | 48.25 |
| 0.5% | 88.74 | 65.45 | 46.75 |

### (2) Effect of the initial reaction temperature on increasing the cellulose content in the acid hydrolyzed straw residue

Preprocessing condition: the proportion of the acid hydrolyzed straw residue to the purified water was 1:9, the initial alkali concentration was 0.4%, the temperature was increased by 20°C per hour, 0.5% concentration of alkali was added, and the reaction time was 4h. The effect of the initial temperature on the increasing of the cellulose content in the acid hydrolyzed straw residue was examined. The reaction temperatures were ①60°C, ②70°C, ③80°C and ④90°C, respectively. The corresponding results are shown in Table 5.

From Table 5, it can be seen that the cellulose content basically shows an increasing trend when the reaction temperature is increased from 60°C to 90°C. When the initial reaction temperature is 90°C, the cellulose content in the remaining residue reaches the maximum of 91.10%, and at this time, the cellulose retention rate is 66.83%.

**Table 5 Effect of the initial reaction temperature on the increasing of the cellulose content in the acid hydrolyzed straw**

| Reaction temperature (°C) | Cellulose content (%) | Cellulose retention (%) | Residue yield (%) |
|---|---|---|---|
| 60 | 80.38 | 89.08 | 70.25 |
| 70 | 89.7 | 70.97 | 50.00 |
| 80 | 88.05 | 68.76 | 49.50 |
| 90 | 91.10 | 66.83 | 46.50 |

### (3) Effect of the reaction time on the increasing the cellulose content in the acid hydrolyzed straw residue

Preprocessing condition: the proportion of the acid hydrolyzed straw residue to the purified water was 1:12, the initial alkali concentration was 0.4%, the initial temperature was 90°C, the temperature was increased by 20°C per hour, and 0.5% concentration alkali was added. The effect of the reaction time on the increasing of the cellulose content in the acid hydrolyzed straw was examined. The reaction time were ①4 h, ② 5 h, ③6 h and ④7 h, respectively. The corresponding results are shown in Table 6. From Table 6, it can be seen that the cellulose content basically shows an increasing trend when the reaction time increases from 4h to 6h. When the reaction time is 6h, the cellulose content in the acid hydrolyzed straw residue reaches the maximum of 97.63%, and at this time, the cellulose retention rate is 66.23%.

**Table 6 Effect of reaction time on increasing cellulose content in acid hydrolyzed straw residue**

| Reaction time (h) | Cellulose content (%) | Cellulose retention (%) | Residue yield (%) |
|---|---|---|---|
| 4 | 91.10 | 66.83 | 46.50 |
| 5 | 96.08 | 66.69 | 44.00 |
| 6 | 97.63 | 66.23 | 43.00 |
| 7 | 96.93 | 63.08 | 41.25 |

### Embodiment 5 Extraction of high-purity xylose hydrolysate and cellulose products (small scale) from the corn straw, including the following steps.

Step 11, the raw material screening was performed and included selecting corn straw raw material with a moisture content of 7%.

Step 12, the raw material preprocessing was performed and included crushing the corn straw using a pulverizer, selecting particles with a particle size of 60-300mesh using a sieve, and putting the particles in a blower drying box, and drying at 45°C for 22h. As a result, by measuring the moisture, absolutely dry material with a moisture content of 0.5% or less was obtained.

Step 13, the alkali processing was performed and included weighing 100g of the crushed and dried corn straw, mixing the crushed and dried corn straw with 600g process water, adding the 30% concentrated NaOH solution into the mixture, adjusting the system NaOH concentration to 0.1%, packing with a sealed blue-capped bottle, and placing the sealed blue-capped bottle in a sterilizer, then heating to 125°C and keeping for 2 h. After heating, the material was cooled and centrifuged to separate the solid and liquid phases. The solid portion was washed using 1L of clean water, and the solid and liquid phases were further separated by centrifugation. After washing twice, the wet weight of the obtained solid portion was 333.6g (82.27g dry basis). The dry basis compositions were tested, which contained about 35.98g of cellulose, 18.98g of hemicellulose, and 27.31g of lignin and others.

Step 14, the acid hydrolysis was performed and included adding all the solid portion obtained in step 3 into 736g of H2SO4 solution with 2.5% concentration, packing with a sealed blue-capped bottle, and placing the sealed blue-capped bottle in a sterilizer, then heating to 100°C for 30 min. After heating, the material was cooled and centrifuged to separate the solid and liquid phases. The weight of the liquid portion was 910g. After the HPLC test, the xylose concentration was 12.56g/L, and the purity was 75.23%. The solid portion was washed using 1L of clean water, and the centrifugation was continued to separate the solid and liquid phases. After washing twice, the wet weight of the obtained solid portion was 183.78g (52.01g dry basis), which contained 34.77g of cellulose and 17.24g of lignin and others according to the composition test.

Step 15, the gradient alkali processing was performed and included adding the solid portion obtained in step 4 into 225g process water, adding the 30% concentrated alkali liquid into the mixture, adjusting the initial concentration of NaOH in the system to 0.2%, packing with a sealed blue-capped bottle, placing the sealed blue-capped bottle in a sand bath to keep warm and heat, setting the initial temperature to 60°C, heating and warm-keeping for 1h, and adding 30% alkali liquid in the blue-capped bottle to make the system alkali concentration increased by 0.5%, rising the temperature by 10°C, according to this pattern, for every 1 h, increasing the system alkali concentration by 0.5%, increasing the temperature by 20 °C, wherein a total reaction time was 4h. After heating, the sample was cooled and centrifuged to separate the solid and liquid phases. The solid portion was washed using 1L of water for three times, and then dried in an oven at 65°C for 20h, after that, 27.19g of dried finished product was obtained and tested, in which the purity of the cellulose was 96.93%.

### Embodiment 6 Extraction of high-purity xylose hydrolysate and cellulose products from the corn straw, including the following steps.

Step 21, the raw material screening was performed and included selecting corn straw raw material with a moisture content of 13%.

Step 22, the raw material preprocessing was performed and included crushing the corn straw using a pulverizer, selecting particles with a particle size of 60-300mesh using a sieve, and putting the particles in a blower drying box, and drying at 45°C for 26h. As a result, by measuring the moisture, absolutely dry material with a moisture content of 0.5% or less was obtained.

Step 23, the alkali processing was performed and included weighing 10 kg of the crushed and dried corn straw, mixing the absolutely dry powdered corn straw with 60kg process water, adding 30% concentrated alkali liquid, adjusting the NaOH concentration of the system to 0.4%, mixing well, then placing the solution in a pressure reactor (which is acid and alkali resistant), heating to 85°C and keeping for 1.2h. After heating, the material was cooled and centrifuged to separate the solid and liquid phases. The solid portion was washed using 50L of clean water, and the solid and liquid phases were further separated by centrifugation. After washing twice, the wet weight of the obtained solid portion was 33.5kg (8.3kg dry basis). The dry basis compositions were tested, which contained about 3.6kg of cellulose, 1.9kg of hemicellulose, and 2.8kg of lignin and others.

Step 24, the acid hydrolysis was performed and included adding the all solid portion obtained in step 3 into 74.5kg of H2SO4 solution with 1.0% concentration, mixing well, placing the solution in the pressure reactor (which is acid and alkali resistant), and heating to 160°C and keeping for 120min. After heating, the material was cooled and centrifuged to separate the solid and liquid phases. The weight of the liquid portion was 90.7kg. After the HPLC test, the xylose concentration was 11.96g/L, and the purity was 73.23%. The solid portion was washed using 30L of clean water, and the centrifugation was continued to separate the solid and liquid phases. After washing twice, the wet weight of the solid portion was 18.9kg (5.6kg dry basis). The components were tested to contain 3.7kg of cellulose and 1.8kg of lignin and others.

Step 25, the gradient alkali processing was performed and included adding the solid portion obtained in step 4 into 23.1kg process water, adding the 30% concentrated alkali liquid into the mixture, adjusting the initial concentration of alkali in the system to 0.1%, mixing well, placing the solution in the pressure reactor (which is acid and alkali resistant) (wherein the reactor is connected to a pipeline with a pump and a replenishment bottle to replenish the 30% alkali liquid), setting the initial temperature to 90°C, heating and warm-keeping for 1h, and adding 30% alkali liquid to make the system alkali concentration increased by 0.1%, rising the temperature by 20°C, according to this pattern, for every 1 h, increasing the system NaOH concentration by 0.1%, increasing the temperature by 20 °C, wherein a total reaction time was 7h. After heating, the product was cooled and centrifuged to separate the solid and liquid phases. The solid portion was washed using 30L of water for three times, and then dried in an oven at 65°C for 20h, after that, 2.82kg of dried finished product was obtained and tested, in which the purity of the cellulose was 95.73%.

### Embodiment 7 Extraction of high-purity xylose hydrolysate and cellulose products from the corn straw, including the following steps.

Step 31, raw material screening was performed and included selecting corn straw raw material with a moisture content of 20%.

Step 32, the raw material preprocessing was performed and included crushing the corn straw using a pulverizer, selecting particles with a particle size of 60-300mesh using a sieve, and putting the particles in a blower drying box, and drying at 45°C for 25h. As a result, by measuring the moisture, absolutely dry material with a moisture content of 0.5% or less was obtained.

Step 33, the alkali processing was performed and included weighing 10kg of the crushed and dried corn straw, mixing the absolutely dry powdered corn straw with 70kg process water, adding 30% concentrated alkali liquid into the mixture, adjusting the NaOH concentration of the system to 0.4%, mixing well, placing the solution in a pressure reactor (which is acid and alkali resistant), and heating to 122°C and keeping for 90min. After heating, the material was cooled and centrifuged to separate the solid and liquid phases. The solid portion was washed using 50L of clean water, and the solid and liquid phases were further separated by centrifugation. After washing twice, the wet weight of the obtained solid portion was 31.5kg (8.1kg dry basis). The dry basis compositions were tested, which contained about 3.7kg of cellulose, 1.9kg of hemicellulose, and 2.5kg of lignin and others.

Step 34, the acid hydrolysis was performed and included adding the all solid portion obtained in step 3 into 72.5kg of H2SO4 solution with 1.6% concentration, mixing well, placing the solution in the pressure reactor (which is acid and alkali resistant), and heating to 110°C and keeping for 120min. After heating, the material was cooled and centrifuged to separate the solid and liquid phases. The weight of the liquid portion was 88.7kg. After the HPLC test, the xylose concentration was 11.86g/L, and the purity was 74.28%. The solid portion was washed using 30L of clean water, and the centrifugation was continued to separate the solid and liquid phases. After washing twice, the wet weight of the obtained solid portion was 20.9kg (6.4kg dry basis) whose components were tested to contain 3.8kg of cellulose, 0.3kg of hemicellulose, and 2.3kg of lignin and others.

Step 35, the gradient alkali processing was performed and included adding the solid portion obtained in step 4 into 28kg process water, adding the 30% concentrated alkali liquid into the mixture, adjusting the initial concentration of NaOH in the system to 0.5%, mixing well, and placing the solution in the pressure reactor (which is acid and alkali resistant) (wherein the pressure reactor is connected to a pipeline with a pump and a replenishment bottle to replenish the 30% alkali liquid.), setting the initial temperature to 80°C, heating and warm-keeping for 1h, and adding 30% alkali liquid to make the system alkali concentration increased by 0.3%, rising the temperature by 15°C, according to this pattern, for every 1 hour, increasing the system alkali concentration by 0.3%, increasing the temperature by 15 °C, wherein a total reaction time was 6h.

After heating, the product was cooled and centrifuged to separate the solid and liquid phases. The solid portion was washed using 3L of water for three times, and then dried in an oven at 65°C for 20h, after that, 2.42kg of dried finished product was obtained and tested, in which the purity of the cellulose was 98.79%.

The foregoing are only preferred embodiments of the present disclosure, and are not intended to limit the present disclosure, and any modifications, equivalent substitutions, and improvements, etc., made within the spirit and principles of the present disclosure shall be included in the scope of protection of the present disclosure.

## Claims

1. A method for extracting xylose liquid and cellulose with high purity from corn straw, comprising:
step 1, raw material screening including: selecting the corn straw with a moisture content of 7%-13%;
step 2, raw material preprocessing including: processing the corn straw into powder using a pulverizer, a particle size of the powder being between 60 mesh and 300 mesh, and then putting the powder into a blower drying box and drying at 45°C for 22 h-26 h to obtain absolutely dry powdered corn straw;
step 3, alkali processing including: after mixing the absolutely dry powdered corn straw obtained in the step 2 with process water, adding 30% concentrated alkali liquid and adjusting a concentration of NaOH in the system to 0.1%-0.4%, performing the alkali processing for 1.2h~2.0h under a temperature of 85°C -125°C, then obtaining straw residue and a centrifugal clear liquid by centrifugal separation, wherein the straw residue enters a xylose extraction process;
step 4, acid hydrolysis including: mixing the straw residue obtained in the step 3 with a 1.0%~2.5% dilute H2SO4 solution in a certain proportion, performing the acid hydrolysis at 100°C~160°C for 30 min-120 min, and then performing a centrifugation to obtain an acid hydrolyzed liquid and acid hydrolyzed straw residue, wherein the acid hydrolyzed liquid is a high-purity xylose liquid, and the acid hydrolyzed straw residue enters a following cellulose extraction process; and
step 5, gradient alkali processing including: after mixing the hydrolyzed straw residue obtained in the step 4 and the process water, adding 30% concentrated alkali liquid and adjusting a concentration of NaOH in the system to 0.2%~1%, performing preprocessing continuously for 4.0h-7.0h, wherein an initial temperature is 60°C ~90°C, then for every 1 hour, increasing the concentration of alkali by 0.1%~0.5% and increasing the temperature by 10°C~20°C, after separating the treated material by centrifugation, washing a solid portion to obtain a high cellulose content product.

2. The method of claim 1, wherein in the step 1, a content of the cellulose in components of the corn straw is 36%~41%, a content of hemicellulose in the components of the corn straw is 19%-24%, and a content of lignin and other substances in the components of the corn straw is 35%-45%.

3. The method of claim 1, wherein in the step 3, for every 100g of the absolutely dry corn straw after the alkali processing, 83.40g straw residue is obtained, wherein the straw residue contains 36.98g cellulose, 18.78g hemicellulose, and 27.64g lignin and other substances.

4. The method of claim 1, wherein in the step 4, for every 100g of the absolutely dry corn straw after the acid hydrolysis, 53.11g of the acid hydrolyzed straw residue and 1.53 L of xylose hydrolysate are obtained, wherein the acid hydrolyzed straw residue contains 34.32g of cellulose, 18.79g of lignin and other substances, and a concentration of xylose in the xylose hydrolysate is 11.84 g/L.

5. The method of claim 1, wherein in the step 5, for every 100g of the absolutely dry corn straw, 27.37g of high-purity cellulose is obtained by the gradient alkali processing.
